# EUROPÄISCHE PATENTSCHRIFT

(11) **EP 1 476 670 B1**
(45) Veröffentlichungstag und Bekanntmachung des Hinweises auf die Patenterteilung: **21.12.2005**
(21) Anmeldenummer: 03739387.3
(22) Anmeldetag: 15.02.2003
(51) Int. Cl.: F16D 65/12

(54) **BREMSSCHEIBE MIT DURCH INNENHOCHDRUCKUMFORMUNG ZWISCHEN NABENTOPF UND REIBRING HERGESTELLTER VERBINDUNG**
BRAKE DISC COMPRISING A CONNECTION BETWEEN THE HUB WELL AND FRICTION RING, PRODUCED BY INTERNAL HYDROFORMING
DISQUE DE FREIN A LIAISON OBTENUE PAR HYDROFORMAGE INTERNE ENTRE POT DE MOYEU ET ANNEAU DE FRICTION

(30) Priorität: 18.02.2002 DE 10206567; 14.02.2003 DE 10306482
(43) Veröffentlichungstag der Anmeldung: 17.11.2004
(73) Patentinhaber: ThyssenKrupp Steel AG, 47166 Duisburg (DE)
(72) Erfinder: KLOSE, Peter, Dr.-Ing., 74239 Hardthausen (DE); LENZE, Franz-Josef, Dr.-Ing., 44229 Dortmund (DE); SCHWARZ, Stefan, Dipl.-Ing., 44536 Lünen (DE)
(74) Vertreter: Cohausz & Florack
(86) Internationale Anmeldenummer: PCT/EP2003/001529
(87) Internationale Veröffentlichungsnummer: WO 2003/069179

(56) Entgegenhaltungen:
- EP-A- 1 124 071
- DE-A- 19 830 666
- US-A- 4 679 681
- US-A- 4 741 194

## Beschreibung

Die Erfindung betrifft eine Bremsscheibe aus einem ringförmigen Bremsscheibenkörper und einem daran angeschlossenen, zentralen, aus Flachmaterial zu einem Topf umgeformten Tragkörper, an dessen Außenrand der Bremsscheibenkörper mit an seinem Innenrand angeordneten, radialen Nasen formschlüssig angeschlossen ist.

Bremsscheiben der eingangs genannten Art, die aus einem ringförmigen Bremsscheibenkörper und daran formschlüssig angeschlossenen topfförmigen Tragkörper bestehen, sind bekannt. Bei einer solchen Bremsscheibe (DE 44 20 758 A1) haben die Nasen die Grundform von Quadern und sind mit dem Außenrand des Tragkörpers dadurch formschlüssig verbunden, daß er in verschiedenen Ebenen angeordnete Ausklinkungen aufweist, von denen ein Teil im Eingriff mit den Nasen steht, ein anderer Teil den ringförmigen Bremsscheibenkörper auf der einen Seite und ein anderer Teil auf der gegenüberliegenden Seite abstützt. Nachteilig bei einer solchen Bremse ist der hohe Fertigungsaufwand, der sowohl in der Vorbereitung der Ausklinkungen als auch in der Montage besteht. Weiter ist von Nachteil, daß eine solche formschlüssige Verbindung nicht spielfrei zu fertigen ist. Zumindest in tangentialer Richtung sind Toleranzen erforderlich, um die jeweils separat gefertigten Teile (Bremsscheibenkörper und Tragkörper) hier zusammensetzen zu können. Ist der Tragkörper von einer Seite auf den Bremsscheibenkörper gesteckt, dann muß anschließend noch eine Lasche der Ausklinkungen umgeklinkt werden.

Einfacher zu fertigen ist dagegen eine andere bekannte, ebenfalls aus einem ringförmigen Bremsscheibenkörper und einem daran formschlüssig angeschlossenen topfförmigen Tragkörper bestehende Bremsscheibe (DE 198 30 666 A1). Als formschlüssige Verbindung weist der ringförmige Bremsscheibenkörper an seinem Innenrand eine in Umfangsrichtung gewellte und in axialer Richtung konvex gekrümmte Kontur auf. Mit diesem Bremsscheibenkörper wird der in den Bremsscheibenkörper eingesetzte topfförmige Formkörper dadurch formschlüssig verbunden, daß seine Wandung durch Innenhochdruckumformen an die Kontur des Innenrandes des Bremsscheibenkörpers gedrückt wird. Der Grad der radialen Verformung der Wandung des Formkörpers ist wegen der sanften Wellenform und der flachen konvexen Wölbung des Innenrandes gering. Es besteht deshalb die Schwierigkeit, einen spielfreien Anschluß in tangentialer Richtung zu erzielen und zu erhalten insbesondere unter dem Aspekt, daß sich der Bremsscheibenkörper infolge der beim Bremsen entstehenden Bremswärme aufweitet.

Der Erfindung liegt die Aufgabe zugrunde, eine einfach herzustellende Bremsscheibe zu entwickeln, bei der sich die unterschiedlichen thermischen Belastungen von Bremsscheibenkörper und Tragkörper nicht in unerwünschten Spannungen auswirken können.

Diese Aufgabe wird mit einer Bremsscheibe der eingangs genannten Art dadurch gelöst, daß die Nasen pyramidenförmig sind und aus der Wandung des topfförmigen Tragkörpers um diese pyramidenförmigen Nasen herum Taschen geformt sind.

Bei der erfindungsgemäßen Bremsscheibe kann sich der beim Bremsen durch die Bremswärme unmittelbar erwärmte Bremsscheibenkörper radial frei ausdehnen, ohne daran durch den zentralen Tragkörper gehindert zu werden. Die formschlüssige Verbindung aus miteinander im Eingriff stehenden Nasen und Taschen lassen nämlich diese freie radiale Ausdehnung bei Aufrechterhaltung des für die Aufnahme des Bremsmomentes benötigten Formschlusses in Umfangsrichtung zu. Für die zweiteilige Bremsscheibe können die für die jeweilige Beanspruchung und Herstellung und das Schwingungsverhalten (Quietschgeräusche) am besten geeigneten Materialien ausgewählt werden. Das sind zum Beispiel für den Bremsscheibenkörper Gußmaterial, aber auch Keramikwerkstoffe, und für den Tragkörper durch bewährte Verfahren umformbares Flachmaterial, insbesondere Blech vor allem aus Stahl aber auch Verbundwerkstoffe. In diesem Sinne besteht auch eine Ausgestaltung der Erfindung darin, daß der Rand des aus Flachmaterial bestehenden Tragkörpers nach Art eines Felgenbettes mit den um die Nasen herum geformten Taschen geformt ist.

Die erfindungsgemäße Bremsscheibe läßt sich auch leicht mit einem Verfahren zum Innenhochdruckumformen des topfförmigen Formkörpers im Bereich seiner Wandung dadurch herstellen, daß in den ringförmigen Bremsscheibenkörper der als Tragkörper dienende Formkörper mit noch glatter Wandung eingesetzt wird und dann die Wandung bei innen- und außenseitiger radialer Abstützung von der Innenseite aus mit Hochdruck beaufschlagt und gleichzeitig axial gestaucht wird, so daß die Wandung im Bereich einer jeden Nase die Taschen um die Nasen herum geformt werden. Dieses Verfahren ist nicht auf die Herstellung von Bremsscheiben beschränkt, sondern gilt allgemein und erlaubt wegen der gleichzeitigen Innenhochdruckbeaufschlagung der Wandung und der axialen Stauchung eine sehr große Verformung im Bereich der Wandung, weil die axiale Stauchung den Materialfluß in radialer Richtung unterstützt. Die dabei benötigte Stauchkraft läßt sich vor allem dann problemlos einleiten, wenn sie auf den freien Rand der Wandung ausgeübt wird.

Um den in der Regel größeren Wärmeausdehnungskoeffizienten des Bremsscheibenkörpers gegenüber dem Tragkörper zumindest teilweise zu kompensieren, kann der Bremsscheibenkörper mit radialer Vorspannung auf dem Tragkörper sitzen. Die Vorspannung kann durch einen auf der äußeren Peripherie des Bremsscheibenkörpers sitzenden Spannring aufgebracht werden. Ein solcher Spannring ist vor allem bei kaum zugbelastbaren Werkstoffen, wie Keramik, nützlich.

Gegenstand der Erfindung ist ferner ein Verfahren zum Herstellen einer Bremsscheibe mit den vorgeschriebenen Merkmalen. Bei einem solchen Verfahren wird in den ringförmigen Bremsscheibenkörper mit seinen radialen Nasen der Tragkörper mit noch glattem Felgenbett eingesetzt. Dann werden durch Innenhochdruckbeaufschlagung des Felgenbettes auf dessen den Nasen abgewandter Seite im Bereich einer jeden Nase die Taschen um die Nasen herum geformt. Der Herstellungsaufwand dafür ist denkbar klein.

Um mit einem vergleichsweise niedrigen Druck und damit auf wirtschaftliche Art und Weise die Innenhochdruckbeaufschlagung durchführen zu können, ist nach einer Ausgestaltung des erfindungsgemäßen Verfahrens vorgesehen, auf den freien Rand des Felgenbettes eine Stauchkraft in Richtung der zu formenden Taschen auszuüben. Da diese Stauchkraft sich dem Druck überlagert, kann der Druck vergleichsweise klein sein.

Das erfindungsgemäße Prinzip des am Beispiel einer Bremsscheibe beschriebenen Innenhochdruckumformens gilt auch für andere Formkörper. Wichtig ist, daß bei einem insbesondere schalenförmigen Körper dessen Rand innen- und außenseitig zwischen Formteilen abgestützt und bei der Innenhochdruckbeaufschlagung in Richtung des zu formenden Bereichs gestaucht wird.

Vorzugsweise werden beim Innenhochdruckumformen die um jede Tasche herum liegenden Bereiche des Felgenbettes durch angesetzte Distanzelemente auf einem einstellbaren radialen Abstand zum Innenrand des Bremsscheibenkörpers gehalten. Dadurch erreicht man, daß in jedem Betriebszustand der Bremsscheibe die einzige Verbindung zwischen Tragkörper und Bremsscheibenkörper die Nasen und Taschen sind und Freiraum für eine eventuell vorgesehene Innenbelüftung des Bremsscheibenkörpers vorhanden ist.

Im folgenden wird die Erfindung anhand einer ein Ausführungsbeispiel darstellenden Zeichnung näher erläutert. Im einzelnen zeigen:
- Figur 1: eine Bremsscheibe in Ansicht,
- Figur 2: die Bremsscheibe nach Figur 1 im Schnitt II-II der Figur 1,
- Figur 3: ein Werkzeug zum Innenhochdruckumformen während der Bestückung mit einem Bremsscheibenkörper und einem Tragkörper im axialen Halbschnitt,
- Figur 4: das Werkzeug gemäß Figur 3 mit dem Bremsscheibenkörper und dem Trägkörper am Ende des Innenhochdruckumformens und

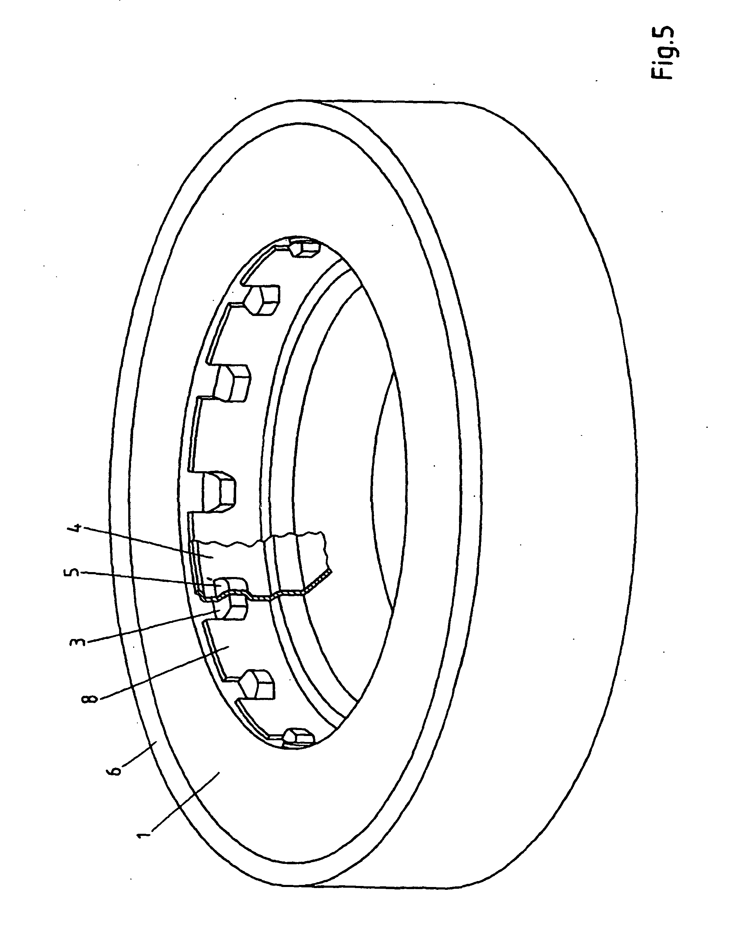

- Figur 5: das Unterwerkzeug des Werkzeuges gemäß Figur 3 und 4 mit eingesetztem Bremsscheibenkörper und einem Ausschnitt eines umgeformten Tragkörpers in perspektivischer Darstellung.

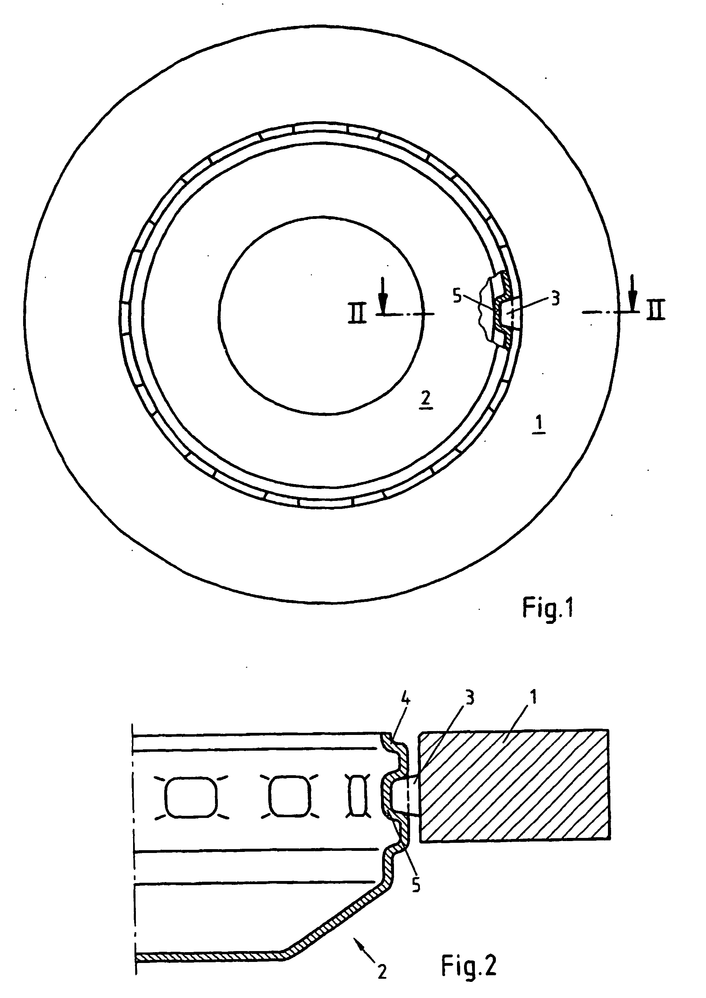

Die in Figur 1 und 2 dargestellte Bremsscheibe besteht aus einem ringförmigen Bremsscheibenkörper 1 und einem daran angeschlossenen, als zentraler Tragkörper dienenden Formkörper 2. Beim Bremsscheibenkörper 1 handelt es sich um ein Gußteil, während es sich beim Tragkörper 2 um ein aus Stahlblech z.B. durch Tiefziehen hergestelltes Formteil handelt.

Der Bremsscheibenkörper 1 weist an seinem Innenrand über den Umfang verteilt angeordnete angegossene Nasen 3 auf, die die Form von Pyramidenstümpfen haben.

Der Tragkörper 2 hat die Grundform eines Topfes. Seine im wesentlichen zylindrische Wandung 4 des Tragkörpers 2 ist nach Art eines Felgenbettes ausgebildet und weist über den Umfang verteilt eingeformte Taschen 5 auf, in die die Nasen 3 des Bremsscheibenkörpers 1 formschlüssig eingreifen. Diese formschlüssige Verbindung erlaubt eine radiale Aufweitung des Bremsscheibenkörpers 1 ohne Behinderung durch den Tragkörper 2 und unter Aufrechterhaltung des Formschlusses in Umfangsrichtung und senkrecht zur Radialebene der Bremsscheibe.

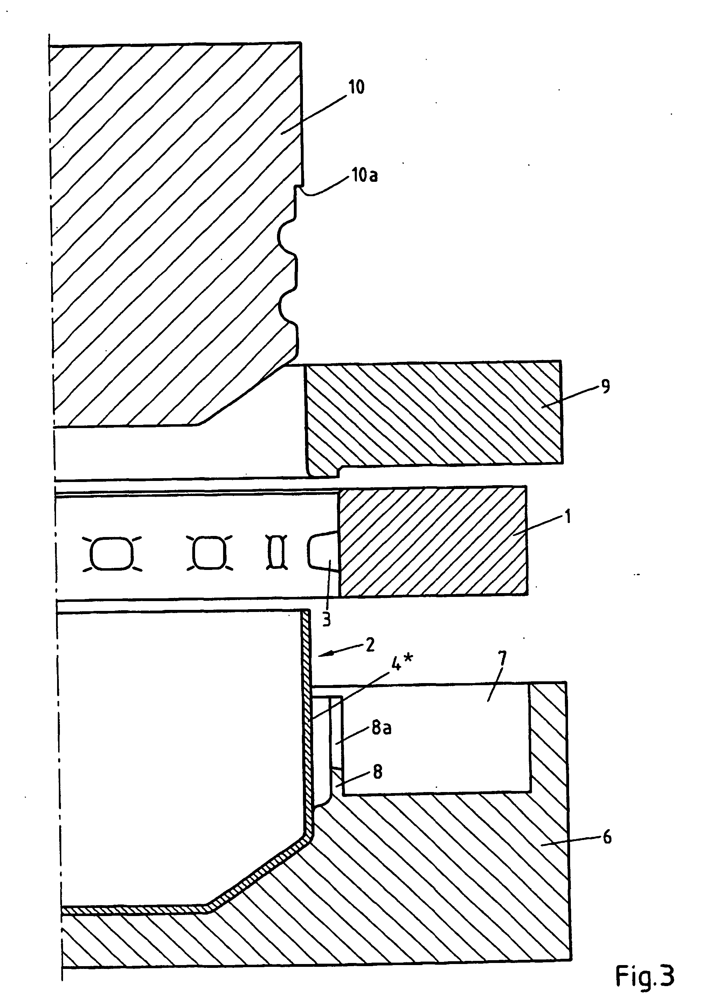

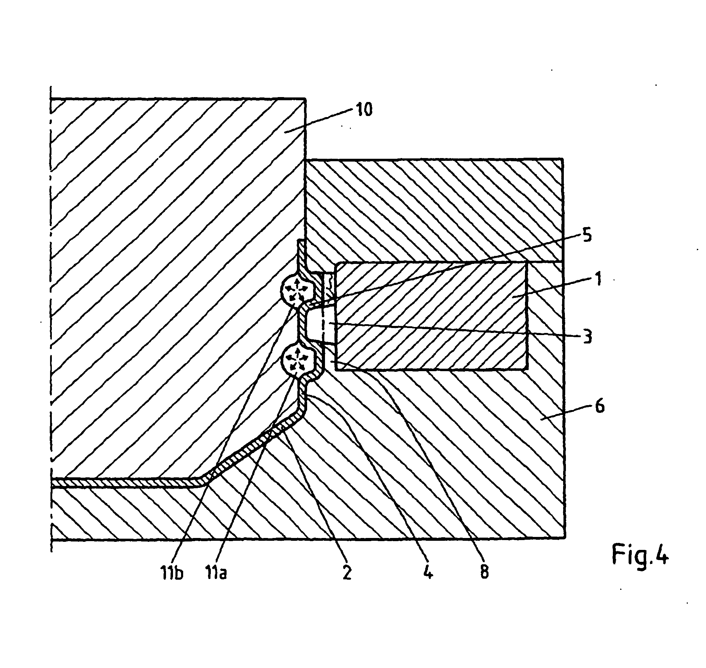

Die Herstellung der formschlüssigen Verbindung zwischen dem Bremsscheibenkörper 1 und dem topfförmigen Tragkörper 2 erfolgt durch Innenhochdruckumformen. In Figur 3 und 4 ist das dafür geeignete Werkzeug mit dem Bremsscheibenkörper 1 und dem Tragkörper 2 dargestellt. In ein topfförmiges Unterwerkzeug 6 wird die topfförmige Vorform des Tragkörpers 2 mit glatter, zylindrischer Wandung 4 eingesetzt. Das Unterwerkzeug 6 weist einen Ringraum 7 auf, in den der Bremsscheibenkörper 1 eingesetzt wird. Dieser Ringraum 7 wird am inneren Rand von einem gezahnten Steg 8 begrenzt. Bei eingesetztem Bremsscheibenkörper 1 ragen dessen Nasen 3 durch die Zahnlücken 8a des Steges 8, so daß sie mit ihren Scheiteln die äußere Peripherie des Tragkörpers 2 praktisch berühren. Dann wird die Form durch Aufsetzen eines Oberwerkzeuges 9 geschlossen und ein Stempel 10 in die topfförmige Vorform des Tragkörpers 2 eingefahren. Der Stempel 10 weist einen Stützkragen 10a auf, mit dem der Stempel 10 auf den freien Rand der Wandung 4 aufsetzt. Damit ist das Werkzeug für das Innenhochdruckumformen komplettiert.

Zum Innenhochdruckumformen wird zwischen der Innenseite der Wandung 4 und der Außenseite des Stempels 10 über nicht dargestellte Kanäle in Räume 11a, 11b ein Wirkmedium unter Hochdruck eingeleitet. Dabei wird über den Stempel 10 auf die Wandung 4 eine Stauchkraft ausgeübt, wobei sich zwischen dem freien Rand der Wandung 4 und dem Stützkragen 10a eine nach außen wirksame Dichtung für das Wirkmedium ergibt. Dieses Wirkmedium formt mit Unterstützung der Stauchkraft die noch flache Wandung 4 um die einzelnen Pyramiden 3 herum unter Belassung eines radialen Abstandes zum Bremsscheibenkörper 1, wie Figur 4 zeigt. Dieser Abstand wird bestimmt durch den Steg 8, der im Bereich um die einzelnen Nasen 3 herum wie Distanzelemente wirkt.

## Patentansprüche

1. Bremsscheibe aus einem ringförmigen Bremsscheibenkörper (1) und einem daran angeschlossenen, zentralen, aus Flachmaterial zu einem Topf umgeformten Tragkörper (2), an dessen Außenrand der Bremskörper (1) mit an seinem Innenrand angeordneten, radialen Nasen (3) formschlüssig angeschlossen ist, **dadurch gekennzeichnet, dass** die Nasen (3) pyramidenförmig sind und aus der Wandung (4) des topfförmigen Tragkörpers (2) und um diese pyramidenförmigen Nasen (3) herum Taschen (5) geformt sind.

2. Bremsscheibe nach Anspruch 1, **dadurch gekennzeichnet, dass** das Flachmaterial ein Metallblech ist.

3. Bremsscheibe nach Anspruch 2, **dadurch gekennzeichnet, dass** das Metallblech aus Stahl besteht.

4. Bremsscheibe nach Anspruch 1, **dadurch gekennzeichnet, dass** das Flachmaterial ein aus mehreren Lagen bestehendes Verbundmaterial ist.

5. Verfahren zum Innenhochdruckumformen eines topfförmigen Formkörpers (2) im Bereich seiner Wandung (4), zur formschlüssigen Verbindung eines ringförmigen Bremsscheibenkörpers (1) mit dem Formkörper (2), nach einem der Ansprüche 1 bis 4, **dadurch gekennzeichnet, daß** die Wandung (4) bei innen- und aussenseitiger radialer Abstützung von der Innenseite aus mit Hochdruck beaufschlagt und gleichzeitig axial gestaucht wird, so daß die Wandung (4) lokal nach außen verformt wird.

6. Verfahren nach Anspruch 5, **dadurch gekennzeichnet, daß** die Stauchkraft auf den freien Rand der Wandung (4) ausgeübt wird.

7. Verfahren nach Anspruch 5 oder 6, **dadurch gekennzeichnet, daß** in den ringförmigen Bremsscheibenkörper (1) der als Tragkörper dienende Formkörper (2) mit noch glatter Wandung (4) eingesetzt wird und dann durch die Innenhochdruckbeaufschlagung der Wandung (4) im Bereich einer jeden Nase (3) Taschen (5) um die Nasen (3) herum geformt werden.

8. Verfahren nach einem der Ansprüche 5 bis 7, **dadurch gekennzeichnet, daß** beim Innenhochdruckumformen die um jede Tasche (5) herum liegenden Bereiche der Wandung (4) durch eingesetzte Distanzelemente (8) auf einen einstellbaren Abstand zum Innenrand des Bremsscheibenkörpers (1) gehalten werden.

9. Verfahren nach einem der Ansprüche 5 bis 8, **dadurch gekennzeichnet, daß** der topfförmige Formkörper (2) aus Flachmaterial, insbesondere durch Tiefziehen, geformt ist.

## Claims

1. Brake disk consisting of an annular brake disc body (1) and a central support body (2), formed from flat material into a well, being connected to said disc body, on whose external edge the brake body (1) is connected by a positive fit with radial lugs (3) arranged on its internal edge, **characterized in that** the lugs (3) are pyramid-shaped and formed from the wall (4) of the well-shaped support body (2) and pockets (5) surrounding these pyramid-shaped lugs (3).

2. Brake disk according to Claim 1, **characterized in that** the flat material is sheet metal.

3. Brake disk according to Claim 2, **characterized in that** the sheet metal consists of steel.

4. Brake disk according to Claim 1, **characterized in that** the flat material is a composite material consisting of several layers.

5. Process for the internal hydro-forming of a well-shaped moulding (2) in the region of its wall (4), in particular for connection by a positive fit of an annular brake disc body (1) to the moulding (2), according to any one of Claims 1 to 4, **characterized in that** the wall (4) is subjected to high pressure whilst being radially supported internally and externally from the inside out, and with simultaneous axial upsetting, so that the wall (4) is locally deformed outwards.

6. Process according to Claim 5, **characterized in that** the upsetting force is exerted on the exposed edge of the wall (4).

7. Process according to Claim 5 or 6, **characterized in that** the moulding (2) serving as support body is inserted with still smooth wall (4) in the annular brake disc body (1) and then pockets (5) are formed around the lugs (3) by internal hydro-forming of the wall (4) in the region of each lug (3).

8. Process according to any one of Claims 5 to 7, **characterized in that** during the internal hydro-forming the regions of the wall (4) surrounding each pocket (5) are held at a variable distance from the internal edge of the brake disc body (1) by inserted spacers (8).

9. Process according to any one of Claims 5 to 8, **characterized in that** the well-shaped moulding (2) is formed from flat material, in particular by deep-drawing.

## Revendications

1. Disque de frein composé d'un corps annulaire (1) de disque de frein et d'un corps de support central (2) relié à celui-ci, transformé en une forme de cloche à partir d'un matériau plan, au bord extérieur duquel le corps (1) de disque de frein est couplé par conjugaison des formes via des nez radiaux (3) disposés à la périphérie intérieure du corps,
**caractérisé en ce que** les nez (3) présentent une forme pyramidale, et que des poches (5) sont formées dans la paroi (4) du corps de support (2) en forme de cloche, en enveloppant ces nez (3) en forme de pyramides.

2. Disque de frein selon la revendication 1, **caractérisé en ce que** le matériau plan est une tôle métallique.

3. Disque de frein selon la revendication 2, **caractérisé en ce que** la tôle métallique est une tôle d'acier.

4. Disque de frein selon la revendication 1, **caractérisé en ce que** le matériau plan est une matière composite constituée de plusieurs couches.

5. Procédé de formage intérieur à haute pression de la zone de paroi (4) d'un corps façonné (2) en forme de cloche, en vue d'un couplage, par conjugaison des formes, d'un corps annulaire (1) de disque de frein au corps façonné (2) selon l'une des revendications 1 à 4,
**caractérisé en ce que** la paroi (4), tout en étant soutenue radialement de l'intérieur et de l'extérieur, est soumise à l'application d'une haute pression de l'intérieur et subit simultanément une force de compression axiale, de telle manière que la paroi (4) se trouve localement déformée vers l'extérieur.

6. Procédé selon la revendication 5, **caractérisé en ce que** la force de compression est exercée sur le bord libre de la paroi (4).

7. Procédé selon la revendication 5 ou 6, **caractérisé en ce que** le corps façonné (2) servant de corps de support est inséré dans le corps annulaire (1) du disque de frein lorsque sa paroi (4) est encore droite, et **en ce que**, par la suite, grâce à l'application de la haute pression intérieure à la paroi (4), des poches (5) sont formées au niveau de chacun des nez (3), qui enveloppent les nez (3).

8. Procédé selon l'une des revendications 5 à 7, **caractérisé en ce que**, pendant le formage intérieur à haute pression, les zones de la paroi (4), qui entourent chaque poche (5), sont maintenues à une distance réglable du bord intérieur du corps (1) du disque de frein au moyen l'éléments entretoises rapportés (8).

9. Procédé selon l'une des revendications 5 à 8, **caractérisé en ce que** le corps façonné (2) en forme de cloche est façonné à partir d'un matériau plan notamment par emboutissage.
